# EUROPEAN PATENT APPLICATION

(11) **EP 3 800 453 A1**
(43) Date of publication of application: **07.04.2021**
(21) Application number: 19201521.2
(22) Date of filing: 04.10.2019
(51) Int. Cl.: G01K 7/16

(54) **SENSOR ELEMENT OF A RESISTANCE THERMOMETER AND SUBSTRATE FOR A SENSOR ELEMENT**

(71) Applicant: TE Connectivity Sensors Germany GmbH, 44227 Dortmund (DE)
(72) Inventor: ROESSINGER, Stefan, 40699 Erkrath (DE); SIRTL, Horst, 91207 Lauf a.d. Pegnitz (DE)
(74) Representative: Patentanwaltskanzlei WILHELM & BECK

(57) **Abstract**

A substrate for a sensor element of a resistance thermometer comprising a first layer, wherein the first layer comprises lanthanum aluminate, wherein a thermal coefficient of expansion of the first layer is approximately equal to the thermal coefficient of expansion of platinum, a sensor element and a method for producing the sensor element is provided.

## Description

The invention refers to a substrate for manufacturing a sensor element and a sensor element of a resistance thermometer and a method for producing a sensor element.

Resistance thermometers known in the art have a measuring structure made of platinum which is arranged on a substrate. The substrate and the measuring structure in known resistance thermometers have different thermal coefficients of expansion. When known resistance thermometers are stressed by abrupt changes in temperature, alterations and damage which act on the entire measuring structure and falsify the measuring values can occur at the boundary layer between the substrate and the measuring structure. Consequently, a temperature measurement made by resistance thermometers becomes more unreliable over time.

DE 10 2015 223 950 A1 discloses a substrate for a sensor element and/or element of a resistance thermometer, wherein the substrate comprises aluminium oxide and zirconium dioxide and has a thermal coefficient of expansion approximately equal to the thermal coefficient of expansion of platinum.

An object of the invention is, among others, to provide a sensor element of a resistance thermometer where the sensor element shows at least less stress or damage at a boundary face between the electrically conducting measuring structure and the substrate.

A further object of the invention is to provide a substrate for a sensor element of a resistance thermometer which provides less thermal stress between an electrically conducting measuring structure and the substrate.

A further object of the invention is to provide a method for producing the sensor element of a resistance thermometer.

The objects of the invention are attained by the independent claims. Further advantages of the embodiments of the invention are disclosed in the dependent claims.

A sensor element of a resistance thermometer comprising a substrate and an electrically conducting measuring structure is proposed. The substrate comprises at least a first layer or consists of the first layer, wherein the first layer comprises lanthanum aluminate. The electrically conducting measuring structure is directly arranged on the first layer. The electrically conducting structure comprises platinum. In a further embodiment, the electrically conducting measuring structure may comprise small amounts of rhodium dispersed in the platinum for a better long term stabilisation of the electrically conducting structure.

The first layer comprising lanthanum aluminate has the advantage that its thermal coefficient of expansion is approximately equal to the thermal coefficient of expansion of platinum. Therefore the first layer or the substrate consisting of the first layer may have a thermal coefficient of expansion which deviates by a maximum of approximately 5% from the thermal coefficient of expansion of the electrically conductive layer comprising or consisting of platinum or platinum-rhodium. Depending on the used embodiment, an even lower deviation of 3%, 2%, 1% or less can be selected.

The small deviation of the thermal coefficient of expansion of the first layer and of the electrically conducting measuring structure results in less stress for the electrically conducting structure during the operation of the resistance thermometer. For example, a resistance thermometer may be operated at temperatures from -200 °C or lower and up to 1000 °C or higher.

Depending on the used embodiment, the first layer is made of lanthanum aluminate. This simplifies the production of the first layer and provides a first layer with a precisely known thermal coefficient of expansion. Depending on the used embodiment, the substrate consists of lanthanum aluminate. This simplifies the production of the substrate and provides a substrate with a precisely known thermal coefficient of expansion.

In a further embodiment, the first layer comprises additionally to the lanthanum aluminate one or several metal oxides, for example Y₂O₃, ZrO₂, MgO, or TiO₂. The metal oxides have the advantage that the thermal coefficient of expansion of the first layer can be adapted more precisely to the thermal expansion coefficient of platinum. Therefore, less thermal stress between the electrically conducting structure and the first layer is attained.

In a further embodiment, the substrate comprises additionally to the first layer a second layer, wherein the first layer is arranged on the second layer. The second layer may be at least three times thicker than the first layer. The second layer may have a higher electrical conductivity than the first layer and may be made of an electrically conducting material. The first layer electrically insulates the electrically conducting measuring structure from the second layer. This embodiment has the advantage that only a thin first layer is necessary and sufficient to provide an electrical insulation layer between the second layer and the measuring structure. Therefore, the second layer can be made of a material which provides a higher mechanical stability and/or which can be produced more easily. For example, the second layer is made of ZrO₂ and the first layer is a lanthanum-aluminate layer that functions as electrically insulation layer that insulates the electrically conducting measuring structure from the second layer.

Depending on the used embodiment, the first layer has a thickness between 1 µm and 10 µm, preferably between 1 µm and 5pm. Experiments have shown that such a thickness for the first layer especially made of lanthanum aluminate is sufficient to provide an insulation layer between the second layer and the measuring structure. Such a thin first layer has the advantage that the production of the first layer is faster. Additionally, the necessary amount of lanthanum aluminate for producing the substrate is small.

In a further embodiment, the electrically conducting measuring structure contains rhodium within the platinum lattice. Rhodium improves the electrical conducting structure. The electrically conducting structure may comprise rhodium in a range between 0.05 weight percent and 2 weight percent or even more. Preferred amounts of rhodium added are in the range of 0.01 weight percent and 1 weight percent. Other metals, for example iridium, may be used additionally or instead of rhodium.

In a further embodiment, the electrically conducting structure is covered with one or several protecting layers, wherein at least the first protecting layer comprises lanthanum aluminate. The application of lanthanum aluminate for the protecting layer results in a sufficient electrical insulation, mechanical and chemical protection of the electrically conducting structure and in a low thermal stress between the protecting layer and the electrically conducting structure. Furthermore, the production of the sensor element is simplified since the deposition of lanthanum aluminate is performed for producing the first layer. Therefore, the same equipment may be used for producing the first layer and the protecting layer. Experiments have shown that a thickness between 1 µm und 10µm preferably between 1µm and 5 µm is sufficient for the protecting layer.

In a further embodiment, the protecting layer additionally to the lanthanum aluminate comprises additionally one or several metal oxides, for example Y₂O₃, ZrO₂, MgO, or TiO₂. The metal oxides have the advantage that the thermal coefficient of expansion of the protecting layer can be adapted more precisely to the thermal expansion coefficient of platinum. Therefore, less thermal stress between the electrically conducting structure and the protecting layer is attained.

A substrate for a sensor element of a resistance thermometer is provided, wherein the substrate comprising at least a first layer or only the first layer is arranged, wherein the first layer comprises lanthanum aluminate, wherein a thermal coefficient of expansion of the first layer is approximately equal to the thermal coefficient of expansion of platinum. The approximate equality between the thermal coefficient of expansion of the electrically conducting structure comprising platinum and the thermal coefficient of expansion of the first layer comprising lanthanum aluminate refers to a deviation less than 5%, preferably less than 3% or less than 2% or less than 1%. The selection of the thermal coefficient of expansion of the first layer and of the electrically conducting measuring structure allows the usage of the sensor element in a temperature range between -200 °C or lower and up to 1000 °C or higher. In the case that the substrate only comprises the first layer, then the thermal coefficient of expansion of the substrate and of the electrically conducting structure allows the usage of the sensor element in a temperature range between -200 °C or lower and up to 1000 °C or higher.

In a further embodiment, the first layer or the substrate is made of lanthanum aluminate.

In a further embodiment, the substrate comprises additionally to the first layer a second layer, wherein the first layer is arranged on the second layer. The second layer is at least three times thicker than the first layer. The second layer has an electrical conductivity which is at least 20% higher than the electrical conductivity of the first layer. The first layer insulates the electrically conducting structure from the second layer. The first layer may have a thickness between 1 µm and 10 µm, preferably between 1 µm and 5 µm.

Furthermore, a sensor element is proposed that comprises a substrate with at least one or several layers and a measuring structure containing platinum, wherein the measuring structure is covered with one or several protecting layers, wherein at least one protecting layer comprises lanthanum aluminate.
The substrate of the sensor element may comprise a second layer, wherein the first layer is arranged on the second layer, wherein the second layer has a higher electrical conductivity than the first layer, and wherein the first layer insulates the electrically conducting measuring structure from the second layer, and wherein the first layer has preferably a thickness between 1 µm and 10 µm.

Furthermore, a method for producing the sensor element is provided comprising: providing a substrate comprising a first layer comprising lanthanum aluminate and forming the electrically conducting structure comprising platinum on the first layer.

The invention will now be described by means of examples with reference to the accompanying Figures, of which:
- Fig. 1: is a schematic sectional view of a sensor element;
- Fig. 2: is a sectional view of a further embodiment of a sensor element;
- Fig. 3: is a sectional view of the sensor element of Fig. 1 with a protecting layer;
- Fig. 4: is a sectional view of the sensor element of Fig. 2 with a protecting layer;
- Fig. 5: is a schematic view on a top side of the electrically conducting structure of a sensor element; and
- Fig. 6: is a schematic sectional view along an A-A line as shown in Fig. 5.

Embodiments of the present invention will be described hereinafter in detail with reference to the attached drawings, wherein similar reference numerals refer to similar elements. The present invention may, however, be embodied in many different forms and should not be construed as being limited to the embodiments set forth herein; rather, these embodiments are provided in such a way that the disclosure will be thorough and complete, and will fully convey the concept of the invention to those skilled in the art.

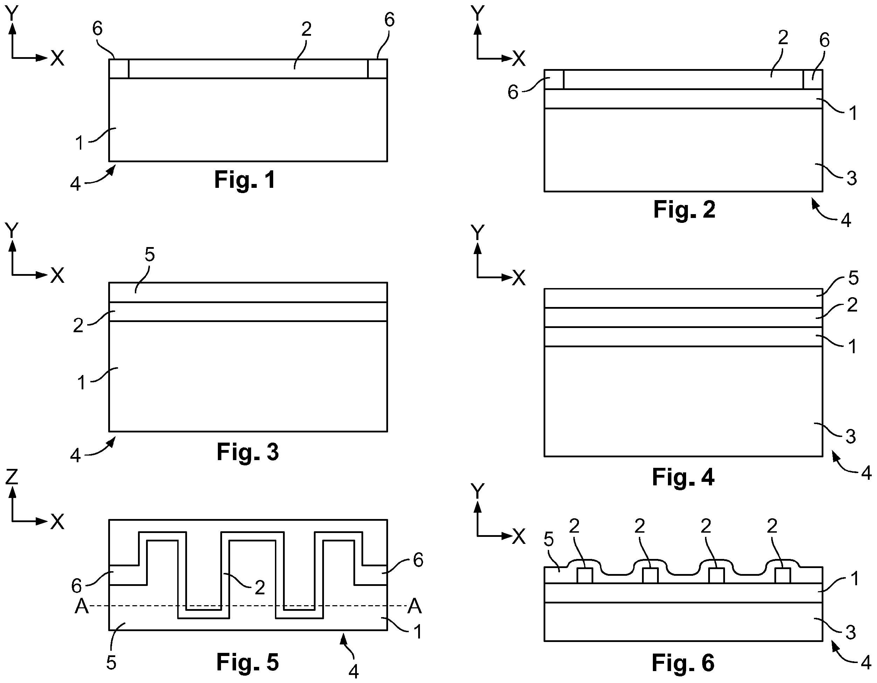

Fig. 1 shows a sectional view of a sensor element of a resistance thermometer. The sensor element comprises a substrate 4 which in this embodiment comprises only a first layer 1. On an upper side of the first layer 1 an electrically conducting structure 2 is arranged. The electrically conducting measuring structure 2 may comprise or may be made or consist of platinum. The first layer 1 may comprise or may be made or consist of lanthanum aluminate. Therefore, the substrate comprises or is made or consists of lanthanum aluminate. Lanthanum aluminate (LaAlO₃) has a molar mass of 213.89 g/mol, a density of about 6.52 g/cm³, a melting point of about 2080 °C and is a crystalline material with a relatively high relative dielectric constant of 25. The crystal structure of lanthanum aluminate is a rhombohedral distorted perovskite with a pseudocubic lattice parameter of 3.787 Ångström at room temperature. Lanthanum aluminate is an optically transparent ceramic oxide. The first layer may be embodied as an epitaxially grown thin film of lanthanum aluminate which may be deposited by a pulsed laser deposition or a molecular beam epitaxy. In this embodiment, the substrate may be embodied as an epitaxially grown film of lanthanum aluminate which may be deposited by a pulsed laser deposition or a molecular beam epitaxy.

The first layer may be produced by screen printing. During the fabrication of the first layer 1 using a screen print process, the lanthanum aluminate is provided as a paste or liquid, wherein powder of lanthanum aluminate is arranged in a solvent. After the deposition of the paste comprising lanthanum aluminate or fluid comprising lanthanum aluminate on a carrier, the solvent is baked out and the first layer 1 made of lanthanum aluminate is attained. In the case, the substrate 4 only comprises the first layer, then the substrate can be produced by the screen printing process using a paste or a liquid comprising lanthanum aluminate. Furthermore, the first layer or the substrate may be embodied as a non-epitaxial lanthanum aluminate film. The lanthanum aluminate has between 0 °C and 1000 °C a thermal coefficient of expansion of about 10 x 10⁻⁶ x K⁻¹.

The substrate 4 with the first layer 1 serves as a support for the electrically conducting measuring structure 2 which can be fragile. The electrically conducting measuring structure 2 may be embodied as a meandering structure. However, the electrically conducting structure 2 may also have a different shape for example a straight small line or a rectangular layer or a layer with the same area as the first layer.

The measuring structure may be used as an electrical resistance structure for example. The measuring structure may comprise at least one contact area 6 for building at least one solder joint to connect to a PCB or at least one welding joint where an electrical conductive wire could be applied. The contact area 6 could be provided directly on the same surface of the first layer 1 as the measuring structure 2. It is also possible to arrange the contact area 6 with a via hole on the opposite side of the first layer 1 or of the substrate. The electrical resistance of the electrically conducting structure 2 changes depending on the temperature. The change in resistance can be measured and the temperature can be deduced from the resistance change.

The first layer 1 of the substrate 4 or the substrate 4 itself can have a thermal coefficient of expansion approximately equal to the thermal coefficient of expansion of the electrically conducting structure 2. For example, the deviation between the thermal coefficient of expansion of the first layer 1 and the electrically conducting structure 2 may be smaller than 5%, smaller than 3% or smaller than 2%, smaller than 1% or even less. The thermal coefficient of expansion of the first layer 1 and the thermal coefficient of expansion of the electrically conducting structure 2 are adapted to one another and can in particular deviate from one another within the specified ranges in a region relevant for measuring, for example in a region in which the sensor element is operated later, for instance from lower than -200 °C to + 1000 °C or even higher temperatures.

Depending on the used embodiment, the first layer may be made of or consists of lanthanum aluminate. Therefore, the substrate may be made of or consists of lanthanum aluminate. In a further embodiment, the first layer may additionally to the lanthanum aluminate comprise a metal oxide, for example Y₂O₃, ZrO₂, MgO or TiO₂. The additional metal oxides beside the lanthanum aluminate allow a more precise adaption of the thermal coefficient of expansion of the first layer to the thermal coefficient of expansion of the electrically conducting structure 2. For example, the first layer may comprise between 0,1 weight percent and 5 weight percent metal oxide.

The thickness of the first layer 1 along the Y-axis may be 100 µm and more. Therefore, the substrate 4 has a thickness along the Y-axis which is 100 µm and more. Furthermore, depending on the used embodiment, the substrate 4 may be arranged on a further carrier.

The electrically conducting measuring structure 2 may be made of platinum or may comprise platinum. Platinum has a thermal coefficient of expansion of about 8.8 x 10⁻⁶ x K⁻¹ at room temperature and 10 x 10⁻⁶ x K⁻¹ between 0 °C and 1000 °C. Depending on the used embodiment, the platinum of the electrically conducting layer is doped with rhodium or iridium. For example, the platinum may be doped with rhodium or iridium in a region of 0.05 to 1 weight percent. The electrically conducting structure 2 may have a thickness of about 400 nm to 1500 nm along the y-axis in a direction vertical to the upper side of the first layer 1.

Fig. 2 shows a further embodiment of the sensor element of a resistance thermometer, wherein the substrate 4 comprises additional to the first layer 1 a second layer 3, wherein the first layer 1 is arranged on the second layer 3 and between the second layer and the measuring structure 2. The first layer 1 may have the same properties as described with regard to the embodiment of Fig. 1. The first layer 1 may have a smaller thickness compared to the embodiment of Fig. 1 since a part of the mechanical stability of the substrate 4 may be provided by the second layer 3.The second layer 3 may be made of a material which has a higher electrical conductivity for example at least 20% higher than the material of the first layer 1. Furthermore, the second layer may have a higher mechanical stability for example at least 20% higher than the material of the first layer 1. For example, the second layer may be for example made of ZrO₂. Depending on the used embodiment, the second layer 3 may also be made of another metal oxide for example TiO₂ or MgO. Furthermore, the second layer may for example be made of another material for example glass, semiconductor or metal.

Furthermore, the second layer 3 may have a larger thickness along the y-axis than the first layer 1. The thickness of the second layer may be three times or more than the thickness of the first layer. Depending on the used embodiment, the second layer may also have another thickness. The substrate 4 may have a thickness along the y-axis of 100 µm or more.

On top of the first layer 1, the electrically conducting measuring structure 2 is arranged. The electrically conducting measuring structure 2 may be identical to the electrically conducting measuring structure 2 of the embodiment of Fig. 1. In this embodiment, the first layer may have a thickness between 1 µm and 5 µm. Depending on the used embodiment, the first layer 1 may also have a thickness greater than 5 µm. The second layer 3 may have a thickness which is at least three times thicker than the first layer and which may have for example a thickness between 50 µm and 200 µm.

The electrically conducting structure 2 may have a thickness of about 400 nm to 1500 nm along the y-axis in a direction vertical to the upper side of the first layer 1.

Fig. 3 shows a sectional view of a further embodiment of the sensor element according to Fig. 1, wherein the electrically conducting measuring structure 2 is covered by a protecting layer 5. The protecting layer 5 covers the free surface of the electrically conducting measuring structure 2. The protecting layer 5 may for example be made of lanthanum aluminate or may comprise lanthanum aluminate. The protecting layer 5 is embodied in such a way that the whole free surface of the electrically conducting measuring structure 2 is covered by the protecting layer 5. Therefore, the electrically conducting measuring structure 2 is protected against environmental influences, for example moisture, dirt or gas. The protecting layer 5 may have a thickness along the y-axis of about 1 to 5 µm. Depending on the used embodiment, the protecting layer may also have a different thickness. The protecting layer 5 may be deposited by the same processes as the first layer 1 for example by a screen print process, a sputter process or a pulsed laser deposition process. Furthermore, the protecting layer may be made of other materials for example glass.

Fig. 4 shows a sectional view of a further embodiment with regard to the embodiment of Fig. 2. In this embodiment, the electrically conducting measuring structure 2 is covered by a protecting layer 5. The protecting layer 5 may be made of the same material and/or the same processes as the protecting layer of Fig. 3.

Fig. 5 shows a schematic view on top of a substrate 4 which comprises at least the first layer 1 or as discussed above additionally a second layer 3. On top of the first layer 1, the electrically conducting measuring structure 2 is arranged. The electrically conducting measuring structure 2 is made of the same material and with the same design as discussed with regard to the Figs. 1 to 4. In the shown embodiment, the electrically conducting measuring structure 2 has the shape of a meander structure. Depending on the used embodiment, the electrically conducting structure 2 may also have different shapes.

Fig. 6 shows a schematic sectional view along an A-A line as shown in Fig. 5. The protecting layer 5 covers the free surface of the electrically conducting structure 2 and also covers the upper side of the first layer 1.

### List of Reference Numerals

- 1: first layer
- 2: electrically conducting structure
- 3: second layer
- 4: substrate
- 5: protecting layer
- 6: contact area

## Claims

1. A sensor element of a resistance thermometer comprising a substrate (4) and an electrically conducting measuring structure (2), wherein the substrate comprises a first layer (1), wherein the first layer (1) comprises lanthanum aluminate, wherein the measuring structure (2) is directly arranged on the first layer (1), wherein the measuring structure (2) comprises platinum.

2. The sensor element of claim 1, wherein the first layer (1) is made of lanthanum aluminate.

3. The sensor element of claim 1, wherein the first layer (1) comprises metal oxide for example Y₂O₃, ZrO₂, MgO or TiO₂.

4. The sensor element of any one of the preceding claims, wherein the substrate (4) comprises a second layer (3), wherein the first layer (1) is arranged on the second layer (3), wherein the second layer (3) has a higher electrical conductivity than the first layer (1), and wherein the first layer (1) electrically insulates the electrically conducting measuring structure (2) from the second layer (3).

5. The sensor element of claim 4, wherein the second layer (3) comprises ZrO₂.

6. The sensor element of claim 4 or 5, wherein the first layer (1) has a thickness between 1 µm and 10 µm.

7. The sensor element of the claims 1 to 6, wherein the measuring structure (2) comprises rhodium.

8. The sensor element of claim 7, wherein the measuring structure (2) comprises rhodium between 0.05 weight percent and 1 weight percent.

9. The sensor element of the claims 1 to 8, wherein the measuring structure (2) comprises iridium.

10. The sensor element of any one of the preceding claims, wherein the measuring structure (2) is covered with one or several protecting layers (5), wherein at least one protecting layer (5) comprises lanthanum aluminate.

11. A sensor element comprising a substrate with at least one or several layers and a measuring structure (2) containing platinum, wherein the measuring structure (2) is covered with one or several protecting layers (5), wherein at least one protecting layer (5) comprises lanthanum aluminate.

12. The sensor element of claim 10 and 11, wherein the protecting layer comprising lanthanum aluminate has a thickness between 1 µm und 10 µm.

13. A substrate (4) for a sensor element of a resistance thermometer comprising a first layer (1), wherein the first layer (1) comprises lanthanum aluminate, wherein a thermal coefficient of expansion of the first layer (1) is approximately equal to the thermal coefficient of expansion of platinum.

14. The substrate of claim 13, wherein the first layer (1) is made of lanthanum aluminate.

15. The substrate of claim 13 or 14, wherein the substrate comprises a second layer (3), wherein the first layer (1) is arranged on the second layer (2), wherein the second layer (3) has a higher electrical conductivity than the first layer (1), and wherein the first layer (1) insulates the electrically conducting measuring structure (2) from the second layer (3), and wherein the first layer (1) has preferably a thickness between 1 µm and 10 µm.

16. A method for producing the sensor element of any one of the claims 1 to 11 comprising: providing a first layer (1) comprising lanthanum aluminate and forming an electrically conducting measuring structure comprising platinum on the first layer.
